Europäisches Patentamt

European Patent Office

Office européen des brevets

(11) Veröffentlichungsnummer: **0 205 045**
**B1**

(12) # EUROPÄISCHE PATENTSCHRIFT

(45) Veröffentlichungstag der Patentschrift:
16.08.89

(51) Int. Cl.⁴: **C 02 F 1/44**, B 01 D 13/00

(21) Anmeldenummer: 86107291.6

(22) Anmeldetag: 28.05.86

(54) Vorrichtung zur Wasserentsalzung.

(30) Priorität: 10.06.85 DE 3520743

(43) Veröffentlichungstag der Anmeldung:
17.12.86 Patentblatt 86/51

(45) Bekanntmachung des Hinweises auf die Patenterteilung:
16.08.89 Patentblatt 89/33

(84) Benannte Vertragsstaaten:
AT BE CH DE FR GB IT LI LU NL SE

(56) Entgegenhaltungen:
DE-A- 2 919 315

DESALINATION, Band 54, 1985, Seiten 137-143, Elsevier Science Publishers B.V., Amsterdam, NL; H.K. HEYBACH et al.: "The chance for reverse osmosis technology: vacuum precoated prefiltration/automation"
PATENTS ABSTRACTS OF JAPAN, Band 5, Nr. 194 (C-82)[866], 10. Dezember 1981, Seite 88 C 82; & JP - A - 56 115 603
CHEMICAL ABSTRACTS, Band 91, Nr. 14, 1. Oktober 1979, Seite 283, Nr. 112263y, Columbus, Ohio, US; R.D.

(73) Patentinhaber: INTERATOM Gesellschaft mit beschränkter Haftung, Friedrich-Ebert-Strasse, D-5060 Bergisch-Gladbach 1 (DE)

(72) Erfinder: Braun, Gerhard, Dipl.-Ing., Untergründemich 26, D-5063 Overath (DE)
Erfinder: Vester, Helmut, Dipl.-Ing., Moselweg 6, D-5253 Lindlar (DE)
Erfinder: Müller-Frank, Ulrich, Dr. Dipl.-Ing., Otto-Hahn-Strasse 5, D-5060 Bergisch Gladbach (DE)
Erfinder: Heybach, Klaus, Dipl.-Ing., Kirschbachstrasse 9, D-4330 Mülheim/Ruhr (DE)

(74) Vertreter: Mehl, Ernst, Dipl.-Ing. et al, Postfach 22 13 17, D-8000 München 22 (DE)

(56) Entgegenhaltungen: (Fortsetzung)
AMMONS: "Development of a 50,000 GPD seawater reverse osmosis pilot plant based on cellulose triacetate hollow fine fibers"
CHEMICAL ABSTRACTS, Band 87, Nr. 4, 25. Juli 1977, Seite 366, Nr. 28779f, Columbus, Ohio, US; J.F. PIZZINO: "Evaluation of single pass seawater reverse osmosis modules and pretreatment techniques. Phase II."

## Beschreibung

Die vorliegende Erfindung betrifft eine Vorrichtung zur Wasserentsalzung, bestehend aus einer Vorreinigungsstufe und einer Entsalzungsstufe nach dem Prinzip der Umkehrosmose.

In den VDI-Nachrichten Nr. 29 vom 22.07.83 wird auf Seite 4 über die Meerwasserentsalzung, insbesondere nach dem Prinzip der Umkehrosmose berichtet. Die dort beschriebenen «Hyperfiltrationsanlagen» verlangen eine optimale Vorbehandlung der Sole. Danach müssen alle Membranmodule in gewissen Zeitabständen chemisch gereinigt werden, um biologische und anorganische Ablagerungen auf den Membranoberflächen zu entfernen. Umkehrosmosemembranen sind sehr dünnwandig und werden mit Rücksicht auf den notwendigen hohen Druck mit geringen Abständen und geringen Kanalquerschnitten zueinander angeordnet. Daher sind sie nicht nur in bezug auf chemische Verunreinigungen sondern auch in bezug auf mechanische Ablagerungen sehr empfindlich. Auch wenn diese Ablagerungen notfalls durch chemische Mittel wieder aufgelöst und entfernt werden können, so ist es doch sehr schwierig, bei den geringen Abmessungen der Kanäle diese Ablagerungen herauszuspülen.

Anschwemmfilter haben einen sehr hohen Abscheidegrad, sie können aber für den der Umkehrosmose vorgeschalteten Kerzenfilter eine besondere Belastung darstellen, weil sie zwangsläufig mit einem sehr feinkörnigen Anschwemmaterial arbeiten müssen, das insbesondere beim Aufbau der Grundanschwemmung durch das Filtergewebe des Anschwemmfilters hindurch dringen kann. Anschwemmfilter brauchen, um die Anschwemmschicht während des Betriebes festzuhalten, eine annähernd konstante Filtriergeschwindigkeit, die durch eine geringe Druckdifferenz aufrecht erhalten wird, und sind daher durch schnelle oder auch langsame Druckänderungen in der anschließenden Anlage gefährdet.

Umkehrosmosefilter brauchen einen hohen Druck und eine konstante Druckdifferenz, die sich aber aufgrund unterschiedlicher Bedingungen und der fortschreitenden Verschmutzung im Betrieb ändert. Auch der vor einem Umkehrosmosefilter notwendigerweise angeordnete Sicherheitsfilter, der den Umkehrosmosefilter vor Verunreinigungen schützen soll, aber selbst nicht viel Verunreinigungen aufnehmen kann, ändert mit der Betriebszeit seinen Durchflußwiderstand. Aus den oben genannten Gründen bereitete bisher die Verknüpfung der Anschwemmfiltration und der Umkehrosmose Probleme.

Aufgabe der vorliegenden Erfindung ist ein Verfahren und Vorrichtungen zur Wasserentsalzung, bestehend aus einer Vorreinigungsstufe und einer Entsalzungsstufe nach dem Prinzip der Umkehrosmose. Damit sollen die unterschiedlichen und mit der Zeit veränderlichen Betriebsbedingungen beider Stufen aufeinander abgestimmt werden, so daß beide Stufen auch bei längerer Betriebszeit in einem sicheren Zustand und nahezu optimal arbeiten können.

Zur Lösung dieser Aufgabe wird ein Verfahren nach dem 1. Anspruch vorgeschlagen. Mit dieser regeltechnischen Verbindung von zwei in ihren Betriebsbedingungen sehr unterschiedlichen Stufen ergibt sich eine Gesamtanlage, die kompakt ist und ohne einen Speicherbehälter zwischen der Vorreinigungsstufe und der Entsalzungsstufe auskommt. Ein solcher Speicherbehälter ist nicht nur mit Kosten- und Raumbedarf verbunden, sondern hat auch Nachteile, insbesondere für solche Anlagen, die in entlegene Gegenden transportiert werden müssen. Für Umkehrosmoseanlagen ist es von besonderer Bedeutung, daß sie auf die vorgeschlagene Weise ständig ein hochwertig vorgereinigtes Wasser verarbeiten können, das eben nicht durch längere Lagerung in einem zumeist offenen Behälter verändert werden kann. Auch in bezug auf den notwendigen Aufwand für Pumpen, Armaturen und Rohrleitungen bietet das vorgeschlagene Verfahren erhebliche Vorteile, weil nur eine Niederdruckpumpe notwendig ist, die gleichzeitig den notwendigen Unterdruck im Anschwemmfilter und den Vordruck für die Hochdruckpumpe der Umkehrosmose liefert.

Die im zweiten Anspruch vorgeschlagene Druckregeleinheit soll den sich im Laufe der Betriebszeit ändernden Druckverlust im Sicherheitsfilter ausgleichen. Sicherheitsfilter vor Umkehrosmoseanlagen sollen die empfindlichen und dünnwandigen Membranen vor Verunreinigungen schützen. Sie haben aber nur ein geringes Aufnahmevermögen und haben daher zwangsläufig während ihrer Betriebszeit einen steigenden Druckverlust. Dieser Druckverlust ist für den Vordruck vor der Hochdruckpumpe von Bedeutung, er läßt sich aber im Niederdruckbereich mit sehr viel geringerem Aufwand als im Hochdruckbereich ausregeln.

Die im 3. Anspruch vorgeschlagene Regeleinheit soll nicht nur im Anschwemmfilter eine konstante und für das Festhalten der Filterschicht notwendige Filtriergeschwindigkeit aufrecht erhalten, sondern auch einen konstanten Vordruck für die Hochdruckpumpe gewährleisten. Daher ist ein Druckbegrenzungsventil vorhanden, das bei zu großer Fördermenge der Niederdruckpumpe einen Teil der schon gereinigten Flüssigkeit zur offenen und damit drucklosen Seite vor dem Anschwemmfilter zurückleitet. Mit dieser Rückleitung ist keine Verschlechterung der Leistung oder der Standzeit des Anschwemmfilters verbunden, weil das einmal bereits gereinigte Wasser den Filter nicht zusätzlich belastet. Das Druckbegrenzungsventil und eine Druck- und/oder Mengenregeleinheit, insbesondere ein Druckreduzierventil bewirken gemeinsam sowohl eine Anpassung der Nettofiltratmenge an die von der Umkehrosmose geforderte Einspeisemenge als auch einen konstanten Vordruck der Hochdruckpumpe. Ändert sich die Einspeisemenge der Umkehrosmose, so steigt der Druck vor dem Sicherheitsfilter und die überschüssige Filtratmenge strömt über das Druckbegrenzungsventil in den Behälter zurück. Das Druckreduzierventil sorgt dabei für konstanten Vordruck an der Hochdruckpumpe und gleicht somit unterschiedlicher Druckverluste des Sicherheitsfilters aus, die aus unterschiedlichen Beladungs- und Strömungsverhältnissen entstehen.

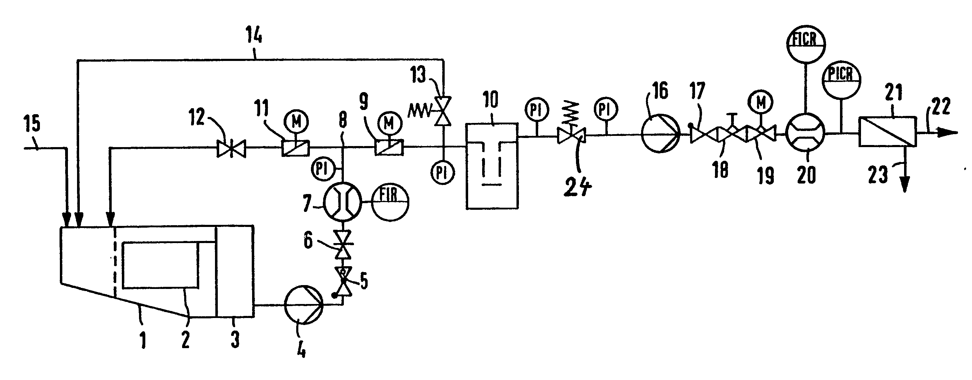

Die Figur zeigt anhand einer schematisch dargestellten Schaltung ein mögliches Ausführungsbeispiel der Erfindung, wobei auf der linken Seite eine Vorreinigungsstufe mit einem offenen Anschwemmfilter nach dem deutschen Patent 2 439 311.1 und auf der rechten Seite eine an sich bekannte Umkehrosmoseanlage dargestellt ist, die zahlreiche, an sich bekannte dünnwandige semipermeable Membranen enthält, die bei ausreichend hohem Druck Wassermoleküle, aber nahezu keine Salze, hindurchtreten lassen.

In dem offenen Behälter 1 sind mehrere vertikale, rahmenförmige Filterelemente 2 angeordnet, die mit einem Filtergewebe bespannt sind und deren Innenseiten mit einer geschlossenen Druckausgleichkammer 3 verbunden sind, von der aus eine Niederdruckpumpe 4 über ein Rückschlagventil 5 einen Drosselschieber 6 und eine Mengenmessung 7 die filtrierte Flüssigkeit zu einer Rohrverzweigung 8 liefert. Von dort wird bei Normalbetrieb die filtrierte Flüssigkeit über eine motorgesteuerte Regelklappe 9 und einen Sicherheitsfilter 10 zur Umkehrosmose geliefert.

Zwischen der Regelklappe 9 und dem Sicherheitsfilter 10 ist ein Druckbegrenzungsventil 13 angeordnet, das bei einem zu hohen Druck an dieser Stelle einen Teil der filtrierten Flüssigkeit durch die Rohrleitung in den offenen Behälter 1 zurückleitet. Dies geschieht immer dann, wenn ein Teil der im Anschwemmfilter filtrierten Flüssigkeit nicht abgenommen werden kann. Mit der Rohrleitung 15 wird die zu filtrierende Flüssigkeit von außerhalb in den Behälter 1 geleitet. Zwischen dem Sicherheitsfilter 10 und der Hochdruckpumpe 16 ist ein Druckreduzierventil 24 angeordnet, mit dem ein konstanter Vordruck für die Hochdruckpumpe gewährleistet wird. An diese Hochdruckpumpe schließt sich in bekannter Weise ein Rückschlagventil 17, ein Handregelventil 18 zur Grundeinstellung und ein motorgeregeltes Ventil 19 an, sowie eine Durchflußmengenmessung 20, bevor die Flüssigkeit in die eigentliche Umkehrosmose 21 eintritt. Dort trennt sich die Flüssigkeit in bekannter Weise in einen reinen Flüssigkeitsstrom 22 und einen stark salzhaltigen Strom 23.

Zur Regenerierung des Anschwemmfilters wird der Anschwemmfilterteil durch Schließen der Regelklappe 9 vom Entsalzungsteil abgekoppelt. Durch gleichzeitiges Öffnen der Regelklappe 11 geht die Anschwemmfiltration in ihren internen Kreislauf. Hierbei wird durch die Einstellung der Drossel 12 das gleiche Druckverhältnis über die Niederdruckpumpe 4 gefahren wie beim Entsalzungsbetrieb, so daß Schwankungen der Filtriergeschwindigkeit ausgeschlossen sind.

Nach Abschalten der Pumpe 4 sedimentiert der Filterkuchen und wird aus dem Filterbehälter gespült. Danach wird dieser erneut gefüllt und die Grundanschwemmung im internen Kreislauf vorgenommen. Nach Beendigung des Regenerationsvorganges wird durch gleichzeitiges Öffnen der Klappe 9 und Schließen der Klappe 11 der Entsalzungsbetrieb wieder aufgenommen.

**Patenansprüche**

1. Verfahren zur Wasserentsalzung, bestehend aus einer Vorreinigungsstufe und einer Entsalzungsstufe nach dem Prinzip der Umkehrosmose mit einem vorgeschalteten Sicherheitsfilter, wobei die Vorreinigungsstufe einen offenen Anschwemmfilter mit vertikalen, rahmenförmigen Filterelementen und mit einer Druckausgleichkammer enthält, in der eine Niederdruckpumpe einen ständigen und konstanten Unterdruck aufrecht erhalten kann, und die Entsalzungsstufe vor der Hochdruckpumpe einen Sicherheitsfilter enthält, dadurch gekennzeichnet, daß die Niederdruckpumpe (4) über den Sicherheitsfilter (10) und eine Druck- und/oder Mengenregeleinheit (24) einen konstanten Vordruck vor der Hochdruckpumpe (16) der Umkehrosmose (21) aufrecht erhält und hinter der Niederdruckpumpe (4) eine Druck- und/oder Mengenregeleinheit (7) vorhanden ist, die im Anschwemmfilter (1, 2, 3) ständig eine konstante Filtriergeschwindigkeit gewährleistet.

2. Vorrichtung zur Durchführung des Verfahrens nach Anspruch 1, dadurch gekennzeichnet, daß eine Druckregeleinheit (24) vorhanden ist, die den Druck vor der Hochdruckpumpe (16) unabhängig von dem sich zeitlich ändernden Druckverlust im Sicherheitsfilter (10) konstant hält.

3. Vorrichtung nach Anspruch 2, dadurch gekennzeichnet, daß zwischen der Niederdruckpumpe (4) und dem Sicherheitsfilter (10) eine Druck- und/oder Mengenregeleinheit mit einem Druckbegrenzungsventil (13) mit einer Rücklaufleitung (14) zur drucklosen Seite des Anschwemmfilters (1) vorhanden ist.

**Claims**

1. Method for water desalination, consisting of a preliminary purification stage and a desalination stage according to the principle of reverse osmosis with a pre-connected safety filter, in which the preliminary purification stage contains an open settling filter with vertical, frame-shaped filter elements and with a pressure equalisation chamber, in which a low pressure pump can maintain a continuous and constant low pressure, and the desalination stage before the high pressure pump contains a safety filter characterised in that the low pressure pump (4) maintains by way of the safety filter (10) and a pressure and/or rate control unit (24) a constant pre-pressure before the high pressure pump (16) of the reserve osmosis (21) and after the low pressure pump (4) there is a pressure and/or rate control unit (7), which continuously assures a constant filtration speed in the settling filter (1, 2, 3).

2. Apparatus for carrying out the method according to claim 1, characterised in that there is a pressure control unit (24) which keeps the pressure before the high pressure pump (16) constant, regardless of the temporally variable pressure loss in the safety filter (10).

3. Apparatus according to claim 2, characterised in that, between the low pressure pump (4) and the safety filter (10), there is a pressure and/or rate control unit with a pressure limitation valve (13) with a return line (14) to the pressure-less side of the settling filter (1).

## Revendications

1. Procédé de dessalement de l'eau, constitué d'un étage de pré-épuration et d'un étage de dessalement suivant le principe de l'osmose inverse, avec un filtre de sécurité en amont, l'étage de pré-épuration contenant un filtre ouvert à couche, ayant des éléments filtrants verticaux en forme de cadre et une chambre d'égalisation de la pression dans laquelle une pompe basse pression peut maintenir une dépression permanente et constante et l'étage de dessalement comporte, en amont de la pompe haute pression, un filtre de sécurité, caractérisé en ce que, la pompe basse pression (4) maintient par l'intermédiaire du filtre de sécurité (10) et d'une unité de réglage de la pression et/ou du débit (24), une pression d'alimentation constante en amont de la pompe haute pression (16) de l'osmose inverse (21), et en aval de la pompe basse pression (4) est prévue une unité de réglage de la pression et/ou du débit (7), qui assure constamment dans le filtre à couche (1, 2, 3), une vitesse constante de filtration.

2. Installation pour la mise en oeuvre du procédé suivant la revendication 1, caractérisée en ce que, il est prévu une unité de réglage de la pression (24) qui maintient constante la pression en amont de la pompe haute pression (16) indépendamment de la perte de charge variable en fonction du temps dans le filtre de sécurité (10).

3. Installation suivant la revendication 2, caractérisée en ce que, entre la pompe basse pression (4) et le filtre de sécurité (10) est prévue une unité de réglage de la pression et/ou du débit avec une soupape de limitation de la pression (13) et avec un conduit de recyclage (14) vers le côté du filtre à couche (1) qui n'est pas sous pression.